# EUROPEAN PATENT APPLICATION

(11) **EP 4 631 746 A1**
(43) Date of publication of application: **15.10.2025**
(21) Application number: 25161095.2
(22) Date of filing: 28.02.2025
(51) Int. Cl.: B60C 11/03, B60C 11/12

(54) **HEAVY DUTY TIRE**

(30) Priority: 11.04.2024 JP 2024063765
(71) Applicant: SUMITOMO RUBBER INDUSTRIES, LTD., Kobe-shi, Hyogo 651-0072 (JP)
(72) Inventor: FUJISE, SATSUKI, 651-0072 Hyogo (JP); ITO, SHUHEI, 651-0072 Hyogo (JP)
(74) Representative: Forresters IP LLP

(57) **Abstract**

A heavy duty tire 2 includes a tread 4. The tread 4 has crown land portions 20. Each crown land portion 20 has a crown narrow groove 32. The crown narrow groove 32 includes inner narrow grooves 34, outer narrow grooves 36, and connection narrow grooves 38. The crown narrow groove 32 includes a body portion 40 and a wide portion 42. The wide portion 42 has a groove width wider than a groove width of the body portion 40. A pair of wall surfaces 32W of the crown narrow groove 32 come into contact with each other at the body portion 40 when the tread 4 comes into contact with a road surface and becomes deformed. The crown narrow groove 32 demarcates two crown narrow land portions 44 in the crown land portion 20. Each crown narrow land portion 44 has a plurality of crown sipes 50.

## Description

### BACKGROUND OF THE INVENTION

### Field of the Invention

The present invention relates to a heavy duty tire.

### Background Art

A tire comes into contact with a road surface at a tread thereof. A tread pattern formed by forming grooves on the tread influences the performance of the tire.

A plurality of circumferential main grooves are formed on the tread of the tire so as to be aligned in the axial direction. The plurality of circumferential main grooves demarcate a plurality of land portions in the tread. By forming lateral grooves on the land portions such that the lateral grooves traverse the land portions, the stiffness of the land portions is controlled. A heavy duty tire that is designed such that running performance on a wet road surface (hereinafter referred to as wet performance) is improved by adjusting the shapes of middle lateral grooves formed on middle land portions, has been known (for example, Japanese Laid-Open

Patent Publication No. 2016-210226).

In consideration of influence on the environment, reduction of the rolling resistance of tires is required.

An object of the present invention is to provide a heavy duty tire that can suppress a decrease in wet performance due to wear while reducing rolling resistance.

### SUMMARY OF THE INVENTION

A heavy duty tire according to the present invention includes a tread, and the tread has a tread surface configured to come into contact with a road surface. The tread has a plurality of circumferential main grooves extending continuously in a circumferential direction. The plurality of circumferential main grooves include a crown circumferential main groove located on an equator plane of the tire and a pair of shoulder circumferential main grooves each located on an outermost side in an axial direction. The plurality of circumferential main grooves demarcate a plurality of land portions in the tread. The plurality of land portions include a pair of crown land portions closest to the equator plane and a pair of shoulder land portions each located axially outward of the shoulder circumferential main groove and including an end of the tread surface. Each of the pair of crown land portions has a crown narrow groove extending continuously in the circumferential direction. The crown narrow groove includes a plurality of inner narrow grooves and a plurality of outer narrow grooves arranged alternately in the circumferential direction, and a plurality of connection narrow grooves connecting the inner narrow grooves and the outer narrow grooves. The outer narrow grooves are located axially outward of the inner narrow grooves. The crown narrow groove includes a body portion including a groove opening of the crown narrow groove and a wide portion located radially inward of the body portion and including a groove bottom of the crown narrow groove. The wide portion has a groove width wider than a groove width of the body portion. A pair of wall surfaces of the crown narrow groove come into contact with each other at the body portion when the tread comes into contact with a road surface and becomes deformed. The crown narrow groove demarcates two crown narrow land portions in the crown land portion. Each of the two crown narrow land portions has a plurality of crown sipes traversing the crown narrow land portion. Of the two crown narrow land portions, the crown narrow land portion located on an axially inner side is an inner crown narrow land portion, and the crown narrow land portion located on an axially outer side is an outer crown narrow land portion. Each of the crown sipes of the inner crown narrow land portion is an inner crown sipe, and a plurality of the inner crown sipes are aligned in the circumferential direction on the inner crown narrow land portion. Each of the crown sipes of the outer crown narrow land portion is an outer crown sipe, and a plurality of the outer crown sipes are aligned in the circumferential direction on the outer crown narrow land portion. The plurality of the inner crown sipes and the plurality of the outer crown sipes are arranged alternately in the circumferential direction on the crown land portion. One said inner crown sipe and one said outer crown sipe are connected to each of the plurality of the inner narrow grooves, and one said inner crown sipe and one said outer crown sipe are connected to each of the plurality of the outer narrow grooves.

The present invention can provide a heavy duty tire that can suppress a decrease in wet performance due to wear while reducing rolling resistance.

### BRIEF DESCRIPTION OF THE DRAWINGS

FIG. 1 is a development view showing a part of a tread of a heavy duty tire according to one embodiment of the present invention;
FIG. 2 is a cross-sectional view of FIG. 1 taken along a line II-II;
FIG. 3 is an enlarged development view showing a part of FIG. 1;
FIG. 4 is a cross-sectional view of FIG. 3 taken along a line IV-IV;
FIG. 5 is a cross-sectional view of FIG. 3 taken along a line V-V; and
FIG. 6 is a cross-sectional view of FIG. 3 taken along a line VI-VI.

### DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

### [Findings on Which Present Invention Is Based]

If a tread pattern that places importance on running performance such as wet performance is adopted for the tread of a tire, the stiffness of the tread tends to decrease. With the tread pattern that places importance on running performance, energy loss is likely to occur in the tread, so that there is a concern that the rolling resistance of the tire may increase.

If the number of land portions formed in the tread is reduced and the volume per land portion is increased, the stiffness of each land portion can be increased, so that the tire can have reduced rolling resistance. However, the tread becomes worn. Grooves that have functioned as edge components disappear and the groove volume decreases. If a tread pattern that places importance on environmental performance is adopted, it is expected that the rolling resistance of a tire can be reduced, but there is a concern that the wet performance of the tire may be decreased due to wear.

In consideration of influence on the environment, tires are required to have further reduced rolling resistance as environmental performance.

Therefore, in order to establish a technology capable of suppressing a decrease in running performance due to wear even with a tread pattern that places importance on environmental performance, the present inventors have conducted a thorough study for a tread pattern for a tire, and have completed the invention described below.

### [Outline of Embodiment of Present Invention]

The present invention is directed to a heavy duty tire including a tread, the tread having a tread surface configured to come into contact with a road surface, wherein: the tread has a plurality of circumferential main grooves extending continuously in a circumferential direction; the plurality of circumferential main grooves include a crown circumferential main groove located on an equator plane of the tire and a pair of shoulder circumferential main grooves each located on an outermost side in an axial direction; the plurality of circumferential main grooves demarcate a plurality of land portions in the tread; the plurality of land portions include a pair of crown land portions closest to the equator plane and a pair of shoulder land portions each located axially outward of the shoulder circumferential main groove and including an end of the tread surface; each of the pair of crown land portions has a crown narrow groove extending continuously in the circumferential direction; the crown narrow groove includes a plurality of inner narrow grooves and a plurality of outer narrow grooves arranged alternately in the circumferential direction, and a plurality of connection narrow grooves connecting the inner narrow grooves and the outer narrow grooves; the outer narrow grooves are located axially outward of the inner narrow grooves; the crown narrow groove includes a body portion including a groove opening of the crown narrow groove and a wide portion located radially inward of the body portion and including a groove bottom of the crown narrow groove; the wide portion has a groove width wider than a groove width of the body portion; a pair of wall surfaces of the crown narrow groove come into contact with each other at the body portion when the tread comes into contact with a road surface and becomes deformed; the crown narrow groove demarcates two crown narrow land portions in the crown land portion; each of the two crown narrow land portions has a plurality of crown sipes traversing the crown narrow land portion; of the two crown narrow land portions, the crown narrow land portion located on an axially inner side is an inner crown narrow land portion, and the crown narrow land portion located on an axially outer side is an outer crown narrow land portion; each of the crown sipes of the inner crown narrow land portion is an inner crown sipe; a plurality of the inner crown sipes are aligned in the circumferential direction on the inner crown narrow land portion; each of the crown sipes of the outer crown narrow land portion is an outer crown sipe; a plurality of the outer crown sipes are aligned in the circumferential direction on the outer crown narrow land portion; the plurality of the inner crown sipes and the plurality of the outer crown sipes are arranged alternately in the circumferential direction on the crown land portion; one said inner crown sipe and one said outer crown sipe are connected to each of the plurality of the inner narrow grooves; and one said inner crown sipe and one said outer crown sipe are connected to each of the plurality of the outer narrow grooves.

The heavy duty tire of the present invention can suppress a decrease in wet performance due to wear while reducing rolling resistance. The mechanism by which this effect is achieved has not been clarified, but is inferred as follows.

The tread of the tire has stiffness higher than the stiffness of a tread having a block pattern in which a plurality of blocks formed by forming lateral grooves on a land portion are aligned in the circumferential direction.

The crown narrow groove extends in the circumferential direction while meandering. In a portion at each inner narrow groove of the crown narrow groove, a recess is formed on the inner crown narrow land portion located on the inner side of the crown narrow groove, and a projection which is fitted into the recess is formed on the outer crown narrow land portion located on the outer side of the crown narrow groove. **In** a portion at each outer narrow groove of the crown narrow groove, a recess is formed on the outer crown narrow land portion, and a projection which is fitted into the recess is formed on the inner crown narrow land portion.

When the tread comes into contact with a road surface and each crown land portion becomes deformed, the pair of wall surfaces of the crown narrow groove come into contact with each other at the body portion of the crown narrow groove, the projections of the outer crown narrow land portion are fitted into the recesses of the inner crown narrow land portion, and the projections of the inner crown narrow land portion are fitted into the recesses of the outer crown narrow land portion. Accordingly, the movement of the crown narrow land portions located on both sides of the crown narrow groove is suppressed. Moreover, since the inner narrow grooves and the outer narrow grooves each have a predetermined length, when the pair of wall surfaces of the crown narrow groove come into contact with each other, the positions thereof are less likely to be shifted from each other. The wall surfaces are firmly engaged with each other, so that the movement of the crown narrow land portions is effectively suppressed.

The crown narrow groove can suppress deformation of the crown land portion. The crown narrow groove can contribute to improving wear resistance and reducing rolling resistance.

Each crown narrow land portion has the crown sipes. The crown sipes can function as edge components. The crown sipes can contribute to improving wet performance.

On each crown land portion, the plurality of the inner crown sipes and the plurality of the outer crown sipes are arranged alternately in the circumferential direction. Moreover, one inner crown sipe and one outer crown sipe are connected to each of the plurality of inner narrow grooves of the crown narrow groove, and one inner crown sipe and one outer crown sipe are connected to each of the plurality of outer narrow grooves of the crown narrow groove. The crown sipes are arranged in a well-balanced manner on the entire crown land portion, so that both improvement of wear resistance and reduction of rolling resistance can be achieved at high levels.

As the wear of the tread progresses, the groove volume decreases. Therefore, there is a concern about a decrease in wet performance. However, each crown narrow groove of the tire includes the wide portion on the radially inner side of the body portion. When the body portion disappears due to wear, the wide portion is exposed. The groove width of the wide portion is wider than the groove width of the body portion. The wide portion can contribute to suppressing a decrease in wet performance.

The volume of the tread is decreased due to wear. The deformation allowance of the tread becomes smaller, so that the apparent stiffness of the tread is increased. The increase in stiffness can contribute to reducing rolling resistance. Even when the wear of the tire progresses, the tire maintains low rolling resistance and suppresses a decrease in wet performance.

From the start of use of the tire until replacement of the tire becomes necessary, the tire can suppress a decrease in wet performance while maintaining low rolling resistance.

The tire can suppress a decrease in wet performance due to wear while reducing rolling resistance.

Preferably, the crown circumferential main groove includes first peaks closer to a first end of the tread surface and second peaks closer to a second end of the tread surface, and extends in a zigzag manner while passing through the first peaks and the second peaks alternately in the circumferential direction. In this case, the crown circumferential main groove can function as an edge component until a state where the tread has been worn and replacement of the tire is necessary is reached. The tire can suppress a decrease in wet performance due to wear.

Preferably, the crown narrow groove has a groove depth df which is the same as a groove depth DGc of the crown circumferential main groove, or is shallower than the crown circumferential main groove. In this case, the tire can suppress a decrease in wet performance by the wide portion of the crown narrow groove even in an end-wear state while suppressing deformation of the crown land portion.

Preferably, the body portion includes a fitted portion between the groove opening and the wide portion of the crown narrow groove, and the fitted portion has a wavy shape. In this case, the positional shift in the radial direction of the pair of wall surfaces of the crown narrow groove when the pair of wall surfaces come into contact with each other is also effectively suppressed. Deformation of the crown land portion is suppressed. The tire can reduce rolling resistance.

Preferably, each of the crown sipes includes an uneven portion at a center in a length direction thereof, and in the uneven portion, the crown sipe extends in a zigzag manner in the length direction and a depth direction thereof. In this case, a pair of wall surfaces of the crown sipe are effectively engaged with each other. Deformation of the crown narrow land portion is suppressed. The tire can reduce rolling resistance.

Preferably, a groove depth of the crown sipe at both ends in the length direction of the crown sipe is shallower than a groove depth of the crown sipe at the center in the length direction of the crown sipe. In this case, the movement of the crown narrow land portion is restricted at each end portion in the length direction of the crown sipe. Compared to a crown sipe formed entirely such that the groove depth thereof is the same as the groove depth at the center thereof, the crown sipe can increase the stiffness of the crown narrow land portion. The tire can reduce rolling resistance.

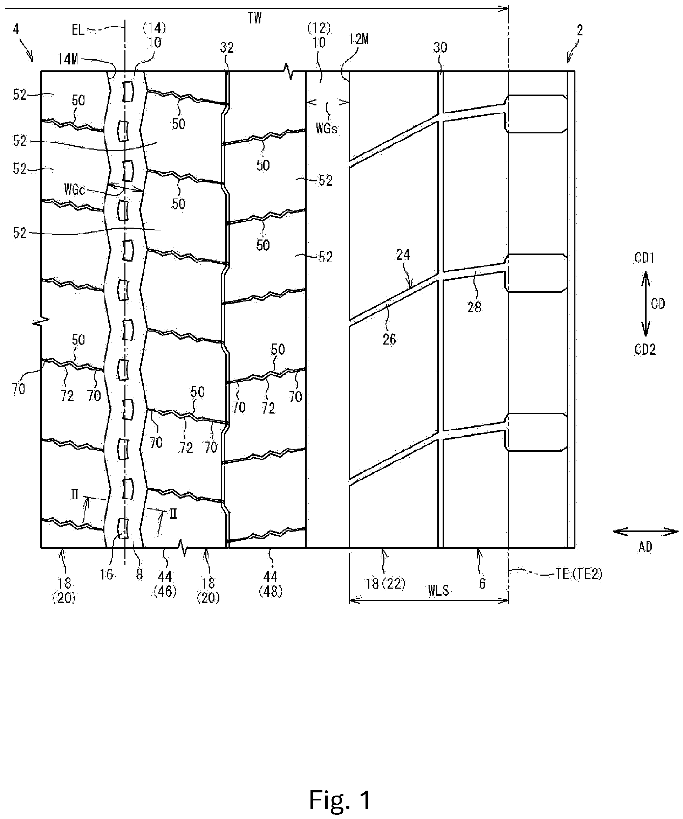

As described above, the heavy duty tire of the present invention can suppress a decrease in wet performance due to wear while reducing rolling resistance. This will be described in detail below with a heavy duty tire shown in FIG. 1 as an example.

### [Details of Embodiment of Present Invention]

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire.

A direction indicated by a double-headed arrow AD is the axial direction of the tire 2. The axial direction of the tire 2 means a direction parallel to the rotation axis of the tire 2. A direction indicated by a double-headed arrow CD is the circumferential direction of the tire 2. A direction perpendicular to the surface of the drawing sheet of FIG. 1 is the radial direction of the tire 2.

An alternate long and short dash line EL extending in the circumferential direction represents the equator plane of the tire 2.

A direction from the equator plane EL toward each end of a tread surface described later is the axially outer side of the tire 2, and a direction from each end of the tread surface toward the equator plane EL is the axially inner side of the tire 2.

A direction indicated by an arrow CD1 is a first circumferential direction side of the tire 2, and a direction indicated by an arrow CD2 is a second circumferential direction side of the tire 2.

The tire 2 includes the tread 4. The tread 4 forms the internal structure of the tire 2.

In the present invention, the internal structure of the tire 2 is not limited to any particular internal structure. Although not described in detail, the tire 2 has a general internal structure as the internal structure of a heavy duty tire.

The tread 4 is formed from a crosslinked rubber. The tread 4 is located on the radially outer side of the tire 2 and extends in the circumferential direction. The outer circumferential surface of the tread 4 is a tread surface 6. The tire 2 comes into contact with a road surface at the tread surface 6. The tread 4 has the tread surface 6 which comes into contact with a road surface.

Grooves 8 are formed on the tread 4. Accordingly, a tread pattern is formed.

FIG. 1 shows the tread pattern formed on the tread 4. The tread pattern of the present invention will be described below using the tread pattern shown in FIG. 1 as an example. The tread pattern shown in FIG. 1 is the tread pattern of a new tire 2 that has not been worn.

The point of intersection of the tread surface 6 and the equator plane EL corresponds to an equator. In the case where the groove 8 is located on the equator plane EL as shown in FIG. 1, the equator is specified on the basis of a virtual outer surface obtained on the assumption that the groove 8 is not provided on the equator plane EL.

An alternate long and two short dashes line indicated by reference character TE represents an end of the tread surface 6.

In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In the tread surface 6 shown in FIG. 1, one end TE (not shown) of the tread surface 6 located on the left side of the equator plane EL is referred to as first end TE1. Another end TE of the tread surface 6 located on the right side of the equator plane EL is referred to as second end TE2. The end TE on the left side of the equator plane EL may be referred to as second end TE2, and the end TE on the right side of the equator plane EL may be referred to as first end TE1.

In FIG. 1, a length indicated by reference character TW is the width of the tread surface 6. The width TW of the tread surface 6 is the distance in the axial direction from the first end TE1 to the second end TE2 of the tread surface 6. The width TW of the tread surface 6 is represented as a length measured along the tread surface 6.

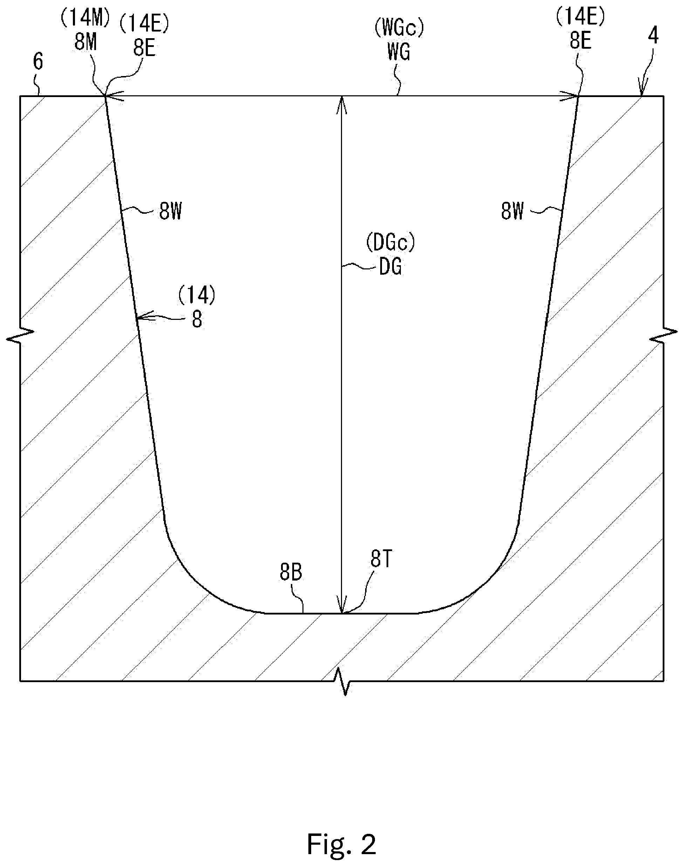

FIG. 2 is a cross-sectional view of FIG. 1 taken along a line II-II. FIG. 2 shows a cross-section of the groove 8, specifically, a center circumferential main groove described later, taken along a plane perpendicular to the length direction of the center circumferential main groove. The main configuration of the groove 8 will be described with reference to FIG. 2.

The groove 8 has a pair of wall surfaces 8W including a groove opening 8M, and a bottom surface 8B including a groove bottom 8T.

The groove width of the groove 8 is represented as the shortest distance (hereinafter referred to as inter-wall surface distance) between a first wall surface 8W and a second wall surface 8W which are the pair of wall surfaces 8W. The inter-wall surface distance is measured along a plane including a pair of edges 8E forming the groove opening 8M or a plane parallel to this plane.

In FIG. 2, a length indicated by a double-headed arrow WG is the groove width of the groove 8 at the groove opening 8M. The groove width WG is measured along the plane including the pair of edges 8E forming the groove opening 8M. In the case where a portion of the groove 8 at the groove opening 8M is processed in a tapered manner, the groove width at the groove opening 8M of the groove 8 is represented on the basis of virtual edges obtained on the assumption that the portion of the groove 8 at the groove opening 8M is not processed in a tapered manner.

A length indicated by a double-headed arrow DG is the groove depth of the groove 8. The groove depth DG of the groove 8 is represented as the shortest distance from the plane including the left and right edges 8E to the groove bottom 8T of the groove 8.

The position, the groove width WG, and the groove depth DG of the groove 8 are determined as appropriate according to the specifications of the tire 2.

The groove bottom 8T is the deepest position in the cross-section of the groove 8. The distance from the plane including the left and right edges 8E forming the groove opening 8M, to the bottom surface 8B, is measured along a normal line of this plane. A position at which the distance from this plane to the bottom surface 8B is the largest is the groove bottom 8T. The direction of the normal line of the plane including the left and right edges 8E is the depth direction of the groove 8.

The bottom surface 8B shown in FIG. 2 is a flat surface. The width center of this flat surface is represented as the groove bottom 8T. The bottom surface 8B may be composed of a curved surface.

In the case where a protrusion is provided on the bottom surface 8B, the groove bottom 8T is specified on the basis of a virtual bottom surface obtained on the assumption that this protrusion is not provided thereon.

The grooves 8 each having a groove width WG of less than 1.0 mm at the groove opening 8M are also referred to as sipes. The grooves 8 other than sipes are also referred to as ordinary grooves, and each have a groove width WG of not less than 1.0 mm at the groove opening 8M thereof.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

An ordinary groove that has a narrow groove width and whose pair of wall surfaces can come into contact with each other when the tire comes into contact with a road surface, is also referred to as narrow groove. An ordinary groove that has a wide groove width and whose pair of groove walls do not come into contact with each other even when the tire comes into contact with a road surface, is also referred to as main groove.

As shown in FIG. 1, a plurality of circumferential main grooves 10 are formed on the tread 4 of the tire 2 so as to be aligned in the axial direction. Each circumferential main groove 10 extends continuously in the circumferential direction. The circumferential main groove 10 is the above-described main groove. The tread 4 has the plurality of circumferential main grooves 10 aligned in the axial direction and extending continuously in the circumferential direction.

The groove depth of each circumferential main groove 10 is, for example, not less than 10 mm and not greater than 21 mm. From the viewpoint that the tire 2 can exhibit excellent wet performance, the groove depth is preferably not less than 13 mm and not greater than 18 mm.

The tread 4 shown in FIG. 1 has three circumferential main grooves 10 aligned in the axial direction. Among the three circumferential main grooves 10, the circumferential main groove 10 located on each outermost side in the axial direction is a shoulder circumferential main groove 12. The circumferential main groove 10 located on the equator plane EL is a crown circumferential main groove 14. The plurality of circumferential main grooves 10 formed on the tread 4 include such a crown circumferential main groove 14 and a pair of such shoulder circumferential main grooves 12.

In the case where a circumferential main groove is further provided between the crown circumferential main groove 14 and each shoulder circumferential main groove 12, this circumferential main groove is also referred to as middle circumferential main groove.

In FIG. 1, a length indicated by a double-headed arrow WGc is the groove width at a groove opening 14M of the crown circumferential main groove 14. A length indicated by a double-headed arrow WGs is the groove width at a groove opening 12M of the shoulder circumferential main groove 12.

The ratio (WGc/TW) of the groove width WGc of the crown circumferential main groove 14 to the width TW of the tread surface 6 exceeds 2.0%. Specifically, the ratio (WGc/TW) is preferably not less than 4.0% and not greater than 10%.

As shown in FIG. 1, the groove width WGs of the shoulder circumferential main groove 12 is larger than the groove width WGc of the crown circumferential main groove 14. The ratio (WGs/TW) of the groove width WGs of the shoulder circumferential main groove 12 to the width TW of the tread surface 6 is preferably not less than 5.0% and not greater than 11%.

As shown in FIG. 1, a protrusion 16 is provided on the bottom surface of the crown circumferential main groove 14 so as to project from the bottom surface. A plurality of protrusions 16 are arranged so as to be spaced at predetermined intervals in the circumferential direction. The protrusions 16 prevent stones from being trapped in the crown circumferential main groove 14.

As described above, the tread 4 has the plurality of circumferential main grooves 10. The plurality of circumferential main grooves 10 demarcate a plurality of land portions 18 in the tread 4.

In the tread 4 shown in FIG. 1, four land portions 18 are formed by forming the three circumferential main grooves 10 thereon. Among the four land portions 18, the land portions 18 closest to the equator plane EL are crown land portions 20. In other words, the land portions 18 located on both sides of the crown circumferential main groove 14 are crown land portions 20. The land portion 18 located on each outermost side in the axial direction is a shoulder land portion 22. The shoulder land portion 22 is located axially outward of the shoulder circumferential main groove 12 and includes the end TE of the tread surface 6. The plurality of land portions 18 formed in the tread 4 include a pair of such crown land portions 20 and a pair of such shoulder land portions 22.

In the case where a land portion is further provided between each crown land portion 20 and each shoulder land portion 22, this land portion is also referred to as middle land portion.

In FIG. 1, a length indicated by a double-headed arrow WLS is the maximum width of the shoulder land portion 22. In each shoulder land portion 22 of the tire 2, the ratio (WLS/TW) of the maximum width WLS to the width TW of the tread surface 6 is not less than 15% and not greater than 25%.

The shoulder land portion 22 has shoulder lateral grooves 24. Each shoulder lateral groove 24 traverses the shoulder land portion 22. The shoulder lateral groove 24 is shallower than the shoulder circumferential main groove 12.

Each shoulder lateral groove 24 includes an inner shoulder lateral groove 26 located on the equator plane EL side and an outer shoulder lateral groove 28 located on the end TE side of the tread surface 6.

The shoulder land portion 22 further has a shoulder narrow groove 30 extending continuously in the circumferential direction. The shoulder narrow groove 30 intersects each shoulder lateral groove 24 at the boundary between the inner shoulder lateral groove 26 and the outer shoulder lateral groove 28. The shoulder narrow groove 30 is shallower than the shoulder circumferential main groove 12.

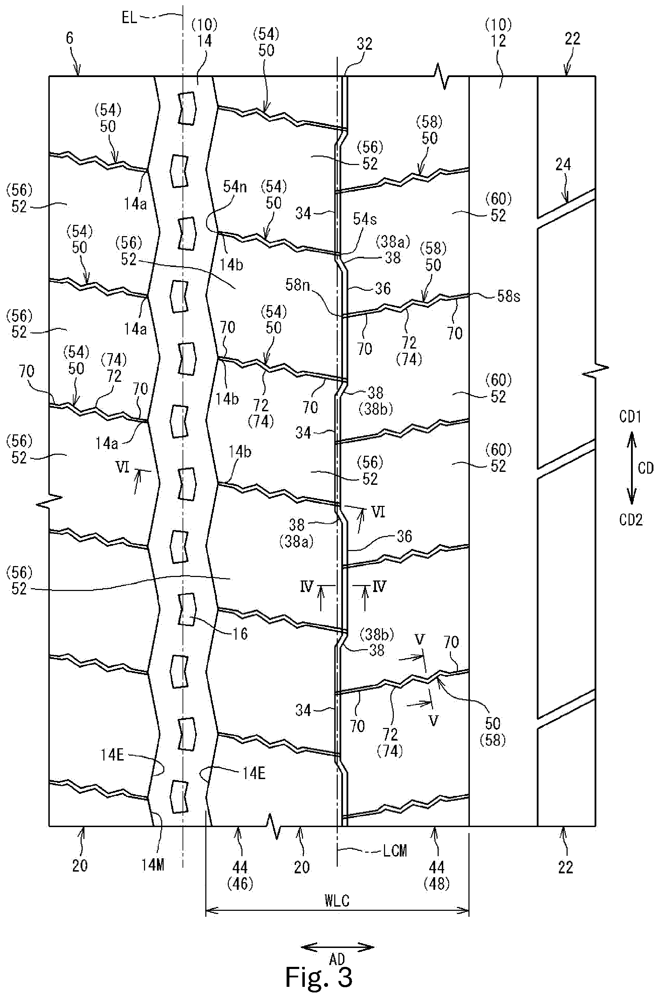

FIG. 3 shows a part of the tread surface 6 shown in FIG. 1. FIG. 3 shows the crown land portion 20.

In FIG. 3, a length indicated by a double-headed arrow WLC is the maximum width of the crown land portion 20. In the crown land portion 20 of the tire 2, the ratio (WLC/TW) of the maximum width WLC to the width TW of the tread surface 6 is not less than 17% and not greater than 27%.

Each of the pair of crown land portions 20 provided in the tread 4 of the tire 2 has a crown narrow groove 32 extending continuously in the circumferential direction.

At least one crown groove 32 is formed on each crown land portion 20. One crown narrow groove 32 is formed on the crown land portion 20 shown in FIG. 3.

In FIG. 3, an alternate long and short dash line LCM is a maximum width center line of the crown land portion 20. The entirety or part of the crown narrow groove 32 is located on the maximum width center line LCM. In other words, the crown narrow groove 32 is located so as to overlap the maximum width center line LCM in the radial direction.

As shown in FIG. 3, the crown narrow groove 32 extends in the circumferential direction while meandering rather than extending straight. In particular, each crown narrow groove 32 of the tire 2 includes a plurality of inner narrow grooves 34 closer to the equator plane EL, a plurality of outer narrow grooves 36 closer to the end TE of the tread surface 6, and a plurality of connection narrow grooves 38 located between the inner narrow grooves 34 and the outer narrow grooves 36.

Each outer narrow groove 36 is located axially outward of the inner narrow groove 34. The plurality of inner narrow grooves 34 and the plurality of outer narrow grooves 36 are arranged alternately in the circumferential direction. Each connection narrow groove 38 connects the inner narrow groove 34 and the outer narrow groove 36.

Among the plurality of connection narrow grooves 38, the connection narrow grooves 38 connecting the inner narrow grooves 34 and the outer narrow grooves 36 located on the second circumferential direction side of the inner narrow grooves 34 are also referred to as first connection narrow grooves 38a. The connection narrow grooves 38 connecting the outer narrow grooves 36 and the inner narrow grooves 34 located on the second circumferential direction side of the outer narrow grooves 36 are also referred to as second connection narrow grooves 38b.

When a unit configured by connecting the inner narrow groove 34, the first connection narrow groove 38a, the outer narrow groove 36, and the second connection narrow groove 38b in this order is defined as a groove unit, the crown narrow groove 32 is formed by connecting a plurality of such groove units in the circumferential direction.

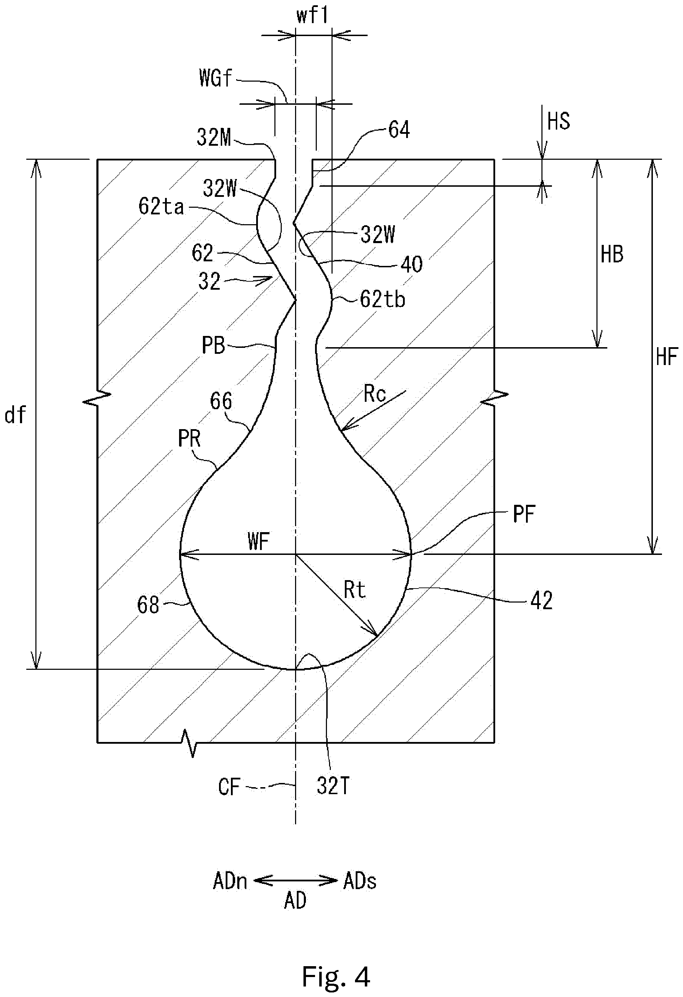

FIG. 4 is a cross-sectional view of the crown narrow groove 32 taken along a line IV-IV in FIG. 3. FIG. 4 shows a cross-section of the crown narrow groove 32 taken along a plane perpendicular to the length direction of the crown narrow groove 32.

In FIG. 4, the equator plane EL is located in a direction indicated by an arrow ADn, and the end TE of the tread surface 6 is located in a direction indicated by an arrow ADs.

A double-headed arrow WGf indicates the groove width at a groove opening 32M of the crown narrow groove 32. A double-headed arrow df indicates the groove depth of the crown narrow groove 32. An alternate long and short dash line CF is a straight line passing through the center of the groove width WGf at the groove opening 32M and a groove bottom 32T. An alternate long and short dash line CF is a center line of the crown narrow groove 32. The direction of the center line CF is the depth direction of the crown narrow groove 32.

The crown narrow groove 32 includes a body portion 40 and a wide portion 42.

The body portion 40 includes the groove opening 32M of the crown narrow groove 32. The body portion 40 connects the groove opening 32M and the wide portion 42. The groove width of the body portion 40 is set such that a pair of wall surfaces 32W of the crown narrow groove 32 can come into contact with each other at the body portion 40 when the tread 4 comes into contact with a road surface and becomes deformed. The crown narrow groove 32 is the above-described narrow groove.

The wide portion 42 is located radially inward of the body portion 40. The wide portion 42 includes the groove bottom 32T of the crown narrow groove 32. The wide portion 42 has a groove width wider than the groove width of the body portion 40.

In FIG. 4, a length indicated by a double-headed arrow WF is the maximum groove width of the wide portion 42. In FIG. 4, a position indicated by reference character PF is a position at which the wide portion 42 has the maximum groove width WF.

The wide portion 42 is tapered outward from the maximum groove width position PF and is tapered inward from the maximum groove width position PF.

The body portion 40 has a groove width which is uniform in the depth direction of the crown narrow groove 32. The fact that the body portion 40 has a groove width which is uniform in the depth direction of the crown narrow groove 32 means that the groove width of the body portion 40 is not less than 0.9 times and not greater than 1.1 times the groove width WGf of the groove opening 32M.

In FIG. 4, a position indicated by reference character PB is the boundary between the body portion 40 and the wide portion 42. As described above, the wide portion 42 has a groove width wider than the groove width of the body portion 40. The position at which the groove width from the body portion 40 to the wide portion 42 is 1.2 times the groove width WGf of the groove opening 32M is the boundary PB between the body portion 40 and the wide portion 42.

As shown in FIG. 3, the crown narrow groove 32 demarcates two crown narrow land portions 44 in the crown land portion 20. Of the two crown narrow land portions 44, the crown narrow land portion 44 closer to the equator plane EL, in other words, the crown narrow land portion 44 located on the axially inner side, is an inner crown narrow land portion 46, and the crown narrow land portion 44 closer to the end TE of the tread surface 6, in other words, the crown narrow land portion 44 located on the axially outer side, is an outer crown narrow land portion 48.

The crown narrow groove 32 is present between the inner crown narrow land portion 46 and the outer crown narrow land portion 48. As described above, in the crown narrow groove 32, the plurality of inner narrow grooves 34 and the plurality of outer narrow grooves 36 are arranged alternately in the circumferential direction. In a portion at each inner narrow groove 34 of the crown narrow groove 32, a recess is formed on the inner crown narrow land portion 46, and a projection which is fitted into the recess is formed on the outer crown narrow land portion 48. In a portion at each outer narrow groove 36 of the crown narrow groove 32, a recess is formed on the outer crown narrow land portion 48, and a projection which is fitted into the recess is formed on the inner crown narrow land portion 46.

Each of the two crown narrow land portions 44 has a plurality of crown sipes 50 traversing the crown narrow land portion 44. The plurality of crown sipes 50 demarcate a plurality of crown blocks 52. Each crown sipe 50 is the above-described sipe.

The crown sipe 50 has a groove width of less than 1.0 mm at the groove opening thereof. The crown sipe 50 has a groove width which is uniform in the depth direction thereof.

Each crown sipe 50 provided on the inner crown narrow land portion 46 is an inner crown sipe 54. On the inner crown narrow land portion 46, a plurality of inner crown sipes 54 are aligned in the circumferential direction. Each crown block 52 of the inner crown narrow land portion 46 is an inner crown block 56. In the inner crown narrow land portion 46, a plurality of inner crown blocks 56 are aligned in the circumferential direction.

Each crown sipe 50 provided on the outer crown narrow land portion 48 is an outer crown sipe 58. On the outer crown narrow land portion 48, a plurality of outer crown sipes 58 are aligned in the circumferential direction. Each crown block 52 of the outer crown narrow land portion 48 is an outer crown block 60. In the outer crown narrow land portion 48, a plurality of outer crown blocks 60 are aligned in the circumferential direction.

As shown in FIG. 3, on the crown land portion 20, the plurality of inner crown sipes 54 and the plurality of outer crown sipes 58 are arranged alternately in the circumferential direction. In other words, the plurality of inner crown sipes 54 and the plurality of outer crown sipes 58 are arranged in a staggered pattern on the crown land portion 20.

Each crown sipe 50 extends so as to be inclined with respect to the axial direction. In other words, the length direction of each crown sipe 50 is inclined with respect to the axial direction. Although not described in detail, an angle of the crown sipe 50 with respect to the axial direction is not less than 5 degrees and not greater than 15 degrees.

An inner end 54n of each inner crown sipe 54 is located on the first circumferential direction CD1 side of an outer end 54s of the inner crown sipe 54. An inner end 58n of each outer crown sipe 58 is located on the second circumferential direction CD2 side of an outer end 58s of the outer crown sipe 58. The inner crown sipes 54 and the outer crown sipes 58 are inclined in directions opposite to each other.

As described above, on each crown land portion 20 of the tire 2, lateral grooves having a wide groove width are not formed, but the crown sipes 50 having a narrow groove width are formed. In the tread pattern of the tread 4, the plurality of crown blocks 52 are aligned in the circumferential direction by forming the crown sipes 50 on each crown land portion 20.

The tread 4 has stiffness higher than the stiffness of a tread having a block pattern in which a plurality of blocks formed by forming lateral grooves on a land portion are aligned in the circumferential direction.

As described above, when the tread 4 comes into contact with a road surface and each crown land portion 20 becomes deformed, the pair of wall surfaces 32W of the crown narrow groove 32 come into contact with each other at the body portion 40 of the crown narrow groove 32. Moreover, as described above, the crown narrow groove 32 extends in the circumferential direction while meandering. In the portion at each inner narrow groove 34 of the crown narrow groove 32, a recess is formed on the inner crown narrow land portion 46, and a projection which is fitted into the recess is formed on the outer crown narrow land portion 48. In the portion at each outer narrow groove 36 of the crown narrow groove 32, a recess is formed on the outer crown narrow land portion 48, and a projection which is fitted into the recess is formed on the inner crown narrow land portion 46. Therefore, when the crown land portion 20 becomes deformed, the pair of wall surfaces 32W of the crown narrow groove 32 come into contact with each other at the body portion 40 of the crown narrow groove 32, the projections of the outer crown narrow land portion 48 are fitted into the recesses of the inner crown narrow land portion 46, and the projections of the inner crown narrow land portion 46 are fitted into the recesses of the outer crown narrow land portion 48. Accordingly, the movement of the crown narrow land portions 44 located on both sides of the crown narrow groove 32 is suppressed.

The inner narrow grooves 34 and the outer narrow grooves 36 each have a predetermined length. Therefore, when the pair of wall surfaces 32W of the crown narrow groove 32 come into contact with each other, the positions thereof are less likely to be shifted from each other. The wall surfaces 32W are firmly engaged with each other, so that the movement of the crown narrow land portions 44 is effectively suppressed.

The crown narrow groove 32 can suppress deformation of the crown land portion 20. The crown narrow groove 32 can contribute to improving wear resistance and reducing rolling resistance.

Each crown narrow land portion 44 has the crown sipes 50. The crown sipes 50 can function as edge components. The crown sipes 50 can contribute to improving wet performance.

On each crown land portion 20, the plurality of inner crown sipes 54 and the plurality of outer crown sipes 58 are arranged alternately in the circumferential direction. Moreover, as shown in FIG. 3, one inner crown sipe 54 and one outer crown sipe 58 are connected to each of the plurality of inner narrow grooves 34 of the crown narrow groove 32, and one inner crown sipe 54 and one outer crown sipe 58 are connected to each of the plurality of outer narrow grooves 36 of the crown narrow groove 32. The crown sipes 50 are arranged in a well-balanced manner on the entire crown land portion 20, so that both improvement of wear resistance and reduction of rolling resistance can be achieved at high levels.

As the wear of the tread 4 progresses, the groove volume decreases. Therefore, there is a concern about a decrease in wet performance. However, each crown narrow groove 32 of the tire 2 includes the wide portion 42 on the radially inner side of the body portion 40. When the body portion 40 disappears due to wear, the wide portion 42 is exposed. The groove width of the wide portion 42 is wider than the groove width of the body portion 40. The wide portion 42 can contribute to suppressing a decrease in wet performance.

The volume of the tread 4 is decreased due to wear. The deformation allowance of the tread 4 becomes smaller, so that the apparent stiffness of the tread 4 is increased. The increase in stiffness can contribute to reducing rolling resistance. Even when the wear of the tire 2 progresses, the tire 2 maintains low rolling resistance and suppresses a decrease in wet performance.

From the start of use of the tire 2 until replacement of the tire 2 becomes necessary, the tire 2 can suppress a decrease in wet performance while maintaining low rolling resistance.

The tire 2 can suppress a decrease in wet performance due to wear while reducing rolling resistance.

As shown in FIG. 3, the crown circumferential main groove 14 of the tire 2 includes first peaks 14a closer to the first end TE1 (not shown) of the tread surface 6 and second peaks 14b closer to the second end TE2 of the tread surface 6. The crown circumferential main groove 14 extends in a zigzag manner while passing through the first peaks 14a and the second peaks 14b alternately in the circumferential direction. As described above, the crown circumferential main groove 14 is located on the equator plane EL. In many cases, the crown circumferential main groove 14 is included in a ground-contact surface. A pair of edges 14E forming the groove opening 14M of the crown circumferential main groove 14 each extend in a zigzag manner in the circumferential direction.

The crown circumferential main groove 14 can function as an edge component until a state where the tread 4 has been worn and replacement of the tire 2 is necessary (hereinafter referred to as end-wear state) is reached. The crown circumferential main groove 14 can contribute to suppressing a decrease in wet performance due to wear. From this viewpoint, it is preferable that the crown circumferential main groove 14 includes the first peaks 14a closer to the first end TE1 of the tread surface 6 and the second peaks 14b closer to the second end TE2 of the tread surface 6, and extends in a zigzag manner while passing through the first peaks 14a and the second peaks 14b alternately in the circumferential direction.

Each crown narrow groove 32 of the tire 2 has the groove depth df which is the same as a groove depth DGc of the crown circumferential main groove 14, or is shallower than the crown circumferential main groove 14.

The crown narrow groove 32 has the wide portion 42 on the groove bottom 32T side thereof. The wide portion 42 of the crown narrow groove 32 can effectively contribute to compensating for the reduced groove volume in the above-described end-wear state. The tire 2 can effectively suppress a decrease in wet performance due to wear.

From this viewpoint, it is preferable that the crown narrow groove 32 has the groove depth df which is the same as the groove depth DGc of the crown circumferential main groove 14, or is shallower than the crown circumferential main groove 14. In other words, it is preferable that the ratio (df/DGc) of the groove depth df of the crown narrow groove 32 to the groove depth DGc of the crown circumferential main groove 14 is not greater than 1.00.

From the viewpoint that the tire 2 can suppress a decrease in wet performance by the wide portion 42 of the crown narrow groove 32 even in the end-wear state while suppressing deformation of the crown land portion 20, the ratio (df/DGc) is preferably not less than 0.80.

As shown in FIG. 4, the body portion 40 of the crown narrow groove 32 includes a fitted portion 62. The fitted portion 62 is located between the groove opening 32M and the wide portion 42 of the crown narrow groove 32. The fitted portion 62 extends in a zigzag manner in the depth direction of the crown narrow groove 32. In the cross-section of the crown narrow groove 32 shown in FIG. 4, the fitted portion 62 has a wavy shape. The fitted portion 62 includes a first peak 62ta closer to the equator plane EL and a second peak 62tb located axially outward of the first peak 62ta, and extends in a zigzag manner while passing through the first peak 62ta and the second peak 62tb.

The fitted portion 62 is bent at each of the first peak 62ta and the second peak 62tb. The number of bent portions included in the fitted portion 62 shown in FIG. 4 is two. The fitted portion 62 may include three or more bent portions. The number of bent portions included in the fitted portion 62 is set as appropriate in consideration of the specifications of the crown narrow groove 32.

The body portion 40 of the crown narrow groove 32 includes a straight portion 64 between the groove opening 32M and the fitted portion 62. The straight portion 64 extends in a straight manner in the depth direction. The fitted portion 62 may be directly connected to the groove opening 32M of the crown narrow groove 32 without providing the straight portion 64.

The fitted portion 62 of the crown narrow groove 32 is directly connected to the wide portion 42. A straight portion extending in a straight manner in the depth direction may be provided between the fitted portion 62 and the wide portion 42.

In FIG. 4, a length indicated by a double-headed arrow HB is the groove depth of the body portion 40. The groove depth HB of the body portion 40 is represented as the distance in the depth direction from the groove opening 32M of the crown narrow groove 32 to the boundary PB between the body portion 40 and the wide portion 42. A length indicated by a double-headed arrow HS is the groove depth of the straight portion 64.

In the case where the straight portion 64 is provided in the body portion 40, the groove depth HS of the straight portion 64 is set to be not greater than 0.15 times the groove depth HB of the body portion 40.

As described above, when the tread 4 comes into contact with a road surface and each crown land portion 20 becomes deformed, the pair of wall surfaces 32W of the crown narrow groove 32 come into contact with each other. At this time, in the fitted portion 62 of the crown narrow groove 32, a projection formed on the wall surface 32W on the end TE side of the tread surface 6 is fitted into a recess formed on the wall surface 32W on the equator plane EL side of the crown narrow groove 32, and a projection formed on the wall surface 32W on the equator plane EL side is fitted into a recess formed on the wall surface 32W on the end TE side of the tread surface 6. Since the fitted portion 62 extends in a zigzag manner in the depth direction, the positional shift in the radial direction of the pair of wall surfaces 32W of the crown narrow groove 32 when the pair of wall surfaces 32W come into contact with each other is also effectively suppressed. Deformation of the crown land portion 20 is suppressed. The tire 2 can reduce rolling resistance. From this viewpoint, it is preferable that the body portion 40 of the crown narrow groove 32 includes the fitted portion 62 between the groove opening 32M and the wide portion 42 of the crown narrow groove 32, and the fitted portion 62 has a wavy shape.

In FIG. 4, a length indicated by a double-headed arrow wf1 is the amplitude in the wavy shape of the fitted portion 62. The amplitude wf1 is represented as the distance from the center line CF of the crown narrow groove 32 to a position at which the maximum displacement of the amplitude is shown (i.e., a peak 62t of the zigzag).

The wavy shape of the fitted portion 62 has a constant amplitude wf1. Accordingly, the positional shift of the pair of wall surfaces 32W of the crown narrow groove 32 when the wall surfaces 32W come into close contact with each other is effectively suppressed. Deformation of the crown land portion 20 is suppressed. The tire 2 can reduce rolling resistance. From this viewpoint, it is more preferable that the wavy shape of the fitted portion 62 has a constant amplitude wf1.

The ratio wf1/WF of the amplitude wf1 in the wavy shape of the fitted portion 62 to the maximum groove width WF of the wide portion 42 is preferably not less than 0.15 and not greater than 0.30.

When the ratio wf1/WF is set to be not less than 0.15, the positional shift of the pair of wall surfaces 32W of the crown narrow groove 32 when the wall surfaces 32W come into close contact with each other is effectively suppressed. Deformation of the crown land portion 20 is suppressed. The tire 2 can reduce rolling resistance. From this viewpoint, the ratio wf1/WF is more preferably not less than 0.20.

When the ratio wf1/WF is set to be not greater than 0.30, concentration of strain on the recesses formed on the wall surfaces 32W is suppressed. The crown narrow groove 32 can sufficiently exhibit its function. Occurrence of chipping or the like in each crown narrow land portion 44 when taking out the tire 2 from a mold (not shown) is suppressed. From this viewpoint, the ratio wf1/WF is more preferably not greater than 0.25.

From the viewpoint that the crown narrow groove 32 can sufficiently exhibit its function, the ratio HB/df of the groove depth HB of the body portion 40 to the groove depth df of the crown narrow groove 32 is preferably not less than 0.30 and not greater than 0.50.

As described above, the wide portion 42 has a groove width wider than the groove width of the body portion 40. From the viewpoint of maintaining wet performance, the maximum groove width WF of the wide portion 42 is preferably not less than two times and more preferably not less than three times the groove width WGf at the groove opening 32M of the crown narrow groove 32. From the viewpoint that the influence on the stiffness of the crown land portion 20 is suppressed and the tire 2 can maintain good uneven wear resistance, the maximum groove width WF of the wide portion 42 is preferably not greater than eight times and more preferably not greater than seven times the groove width WGf at the groove opening 32M of the crown narrow groove 32.

As described above, the wide portion 42 is tapered outward from the maximum groove width position PF and is tapered inward from the maximum groove width position PF.

As shown in FIG. 4, the wide portion 42 is curved so as to be recessed inward from the outer side thereof between the body portion 40 and the maximum groove width position PF. The portion of the wide portion 42 from the maximum groove width position PF to the groove bottom 32T has a rounded contour. In this portion, the wide portion 42 is curved so as to bulge outward from the inner side thereof.

In the tire 2, the portion of the wide portion 42 that is on the radially outer side of the maximum groove width position PF and that is curved so as to be recessed inward from the outer side thereof is also referred to as inflection portion 66. The portion of the wide portion 42 other than the inflection portion 66 that is curved so as to bulge outward from the inner side thereof is also referred to as bottom portion 68.

The wide portion 42 includes the inflection portion 66 and the bottom portion 68. The inflection portion 66 is located radially inward of the body portion 40. The bottom portion 68 is located radially inward of the inflection portion 66.

The inflection portion 66 connects the body portion 40 and the bottom portion 68. The groove width of the inflection portion 66 gradually increases from the body portion 40 side toward the bottom portion 68 side. As described above, the inflection portion 66 is curved so as to be recessed inward from the outer side thereof. In the tire 2, the contour of the inflection portion 66 is represented by an arc. In FIG. 4, an arrow Rc indicates the radius of the arc representing the contour of the inflection portion 66.

The bottom portion 68 includes the groove bottom 32T. As described above, the bottom portion 68 is curved so as to bulge outward from the inner side thereof. The bottom portion 68 has a rounded contour. In the tire 2, the contour of the bottom portion 68 is represented by an arc. In FIG. 4, an arrow Rt indicates the radius of the arc representing the contour of the bottom portion 68. The radius Rt of this arc is, for example, not less than 1.5 mm and not greater than 4.5 mm.

A position indicated by reference character PR is the boundary between the inflection portion 66 and the bottom portion 68. The arc representing the contour of the inflection portion 66 and the arc representing the contour of the bottom portion 68 are tangent to each other at the boundary PR.

As shown in FIG. 4, the maximum groove width position PF of the wide portion 42 is included in the bottom portion 68. In other words, the maximum groove width position PF is located radially inward of the boundary PR. The center of the arc representing the contour of the bottom portion 68 is located on a line segment indicating the maximum groove width WF. Therefore, the maximum groove width WF of the wide portion 42 is equal to twice the radius Rt of the arc representing the contour of the bottom portion 68.

In the tire 2, the radius Rc of the arc representing the contour of the inflection portion 66 is larger than the radius Rt of the arc representing the contour of the bottom portion 68. Accordingly, the crown narrow groove 32 can sufficiently exhibit its function. From this viewpoint, the ratio Rc/Rt of the radius Rc of the arc representing the contour of the inflection portion 66 to the radius Rt of the arc representing the contour of the bottom portion 68 is preferably not less than 1.1 and not greater than 2.0.

When the ratio Rc/Rt is set to be not less than 1.1, concentration of strain on the inflection portion 66 is suppressed. The crown narrow groove 32 can sufficiently exhibit its function. From this viewpoint, the ratio Rc/Rt is more preferably not less than 1.4.

When the ratio Rc/Rt is set to be not greater than 2.0, the crown narrow groove 32 can be formed such that the body portion 40 has the required length. In this case as well, the crown narrow groove 32 can sufficiently exhibit its function. From this viewpoint, the ratio Rc/Rt is more preferably not greater than 1.7.

In FIG. 4, a length indicated by a double-headed arrow HF is the maximum groove width depth of the wide portion 42. The maximum groove width depth HF of the wide portion 42 is represented as the distance in the depth direction from the groove opening 32M of the crown narrow groove 32 to the maximum groove width position PF of the wide portion 42.

From the viewpoint that the crown narrow groove 32 can sufficiently exhibit its function, the ratio HF/df of the maximum groove width depth HF of the wide portion 42 to the groove depth df of the crown narrow groove 32 is preferably not less than 0.70 and not greater than 0.80.

As described above, each crown narrow land portion 44 of the tire 2 has a plurality of crown sipes 50. For example, as shown in FIG. 3, each crown sipe 50 includes a portion extending in a straight manner at each end portion in the length direction thereof and a portion extending in a zigzag manner at a center portion in the length direction thereof. The portion of the crown sipe 50 extending in a straight manner at each end portion in the length direction is referred to as end portion, and the portion of the crown sipe 50 extending in a zigzag manner at the center portion in the length direction is referred to as intermediate portion.

Each crown sipe 50 of the tire 2 includes a pair of end portions 70 and an intermediate portion 72 located between the pair of end portions 70. The crown sipe 50 is connected to the crown narrow groove 32 or the circumferential main groove 10 at each end portion 70.

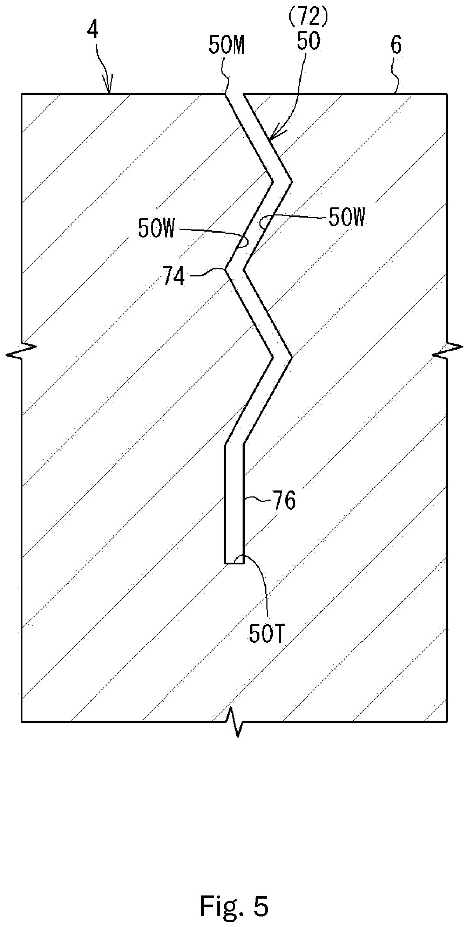

FIG. 5 shows a cross-section of the intermediate portion 72 of the crown sipe 50 taken along a line V-V in FIG. 3.

The intermediate portion 72 includes an uneven portion 74 and a flat portion 76.

The flat portion 76 is located radially inward of the uneven portion 74. The flat portion 76 includes a groove bottom 50T of the crown sipe 50. As shown in FIG. 5, the flat portion 76 extends in a straight manner in the depth direction of the crown sipe 50. The flat portion 76 also extends in a straight manner in the length direction of the crown sipe 50.

The uneven portion 74 includes a groove opening 50M of the crown sipe 50. As shown in FIG. 5, the uneven portion 74 extends in a zigzag manner in the depth direction of the crown sipe 50. As shown in FIG. 3, the uneven portion 74 also extends in a zigzag manner in the length direction of the crown sipe 50. The crown sipe 50 includes the uneven portion 74 at the center in the length direction thereof, and in the uneven portion 74, the crown sipe 50 extends in a zigzag manner in the length direction and the depth direction thereof. A specific example of the shape of the uneven portion 74 extending in a zigzag manner in the length direction and the depth direction is a Miura fold shape.

In the tire 2, in the uneven portion 74, a pair of wall surfaces 50W of the crown sipe 50 are effectively engaged with each other. Deformation of the crown narrow land portion 44 is suppressed. The tire 2 can reduce rolling resistance. From this viewpoint, it is preferable that the crown sipe 50 includes the uneven portion 74 at the center in the length direction thereof, and in the uneven portion 74, the crown sipe 50 extends in a zigzag manner in the length direction and the depth direction thereof.

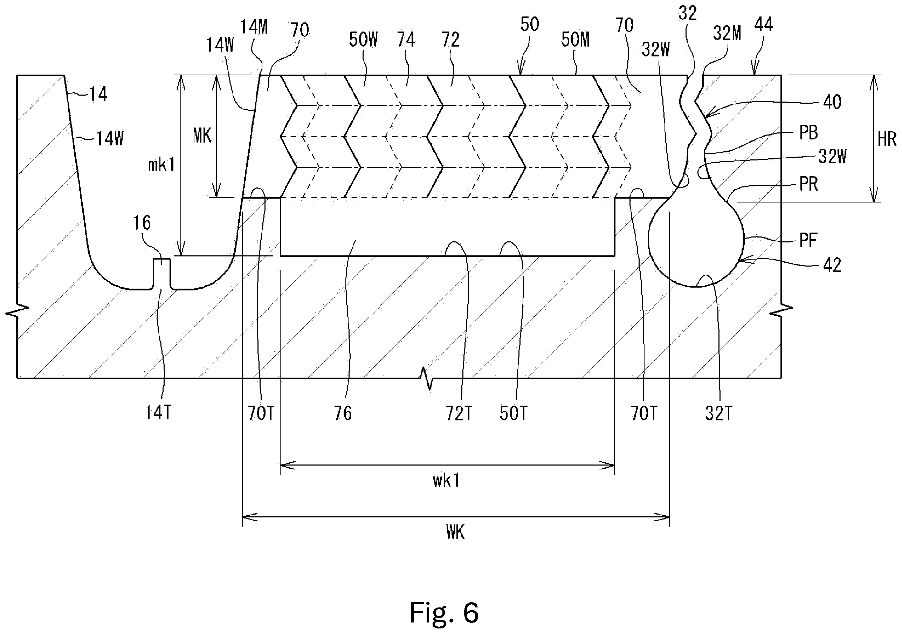

FIG. 6 shows a cross-section of the tread 4 taken along a line VI-VI in FIG. 3. This cross-section includes the wall surfaces 50W of the crown sipe 50.

In FIG. 6, a length indicated by a double-headed arrow WK is the groove length of the groove bottom 50T of the crown sipe 50. The groove length WK is represented as the length of a line segment connecting one end and another end of the groove bottom 50T. The groove length WK is the groove length of the crown sipe 50.

A length indicated by a double-headed arrow wk1 is the groove length of the intermediate portion 72 of the crown sipe 50. The groove length wk1 is represented as the length of a line segment connecting one end and another end of a groove bottom 72T of the intermediate portion 72. The groove length wk1 of the intermediate portion 72 corresponds to the groove length of the uneven portion 74.

The ratio wk1/WK of the groove length wk1 of the uneven portion 74 to the groove length WK of the crown sipe 50 is preferably not less than 0.45 and not greater than 0.75. Accordingly, the uneven portion 74 can effectively contribute to suppressing deformation of the crown narrow land portion 44. The tire 2 can reduce rolling resistance. From this viewpoint, the ratio wk1/WK is more preferably not less than 0.60 and not greater than 0.70.

As shown in FIG. 6, a groove bottom 70T of each end portion 70 of the crown sipe 50 is located radially outward of the groove bottom 72T of the intermediate portion 72 of the crown sipe 50. In other words, the groove depth of the crown sipe 50 at both ends in the length direction of the crown sipe 50 is shallower than the groove depth of the crown sipe 50 at the center in the length direction of the crown sipe 50.

In each end portion 70 of the crown sipe 50, a portion of the crown narrow land portion 44 extends continuously without interruption in the circumferential direction. Therefore, the movement of the crown narrow land portion 44 is restricted at the end portion 70 of the crown sipe 50. Compared to a crown sipe formed entirely such that the groove depth thereof is the same as the groove depth at the center thereof, the crown sipe 50 can increase the stiffness of the crown narrow land portion 44. The tire 2 can reduce rolling resistance. From this viewpoint, it is preferable that the groove depth of the crown sipe 50 at both ends in the length direction of the crown sipe 50 is shallower than the groove depth of the crown sipe 50 at the center in the length direction of the crown sipe 50.

In FIG. 6, a length indicated by a double-headed arrow mk1 is the groove depth of the intermediate portion 72 of the crown sipe 50. The groove depth mk1 is represented as the distance in the depth direction from the groove opening 50M of the crown sipe 50 to the groove bottom 72T of the intermediate portion 72. The groove depth mk1 corresponds to the groove depth of the crown sipe 50 at the center in the length direction of the crown sipe 50. The groove depth of the crown sipe 50 is represented as the groove depth mk1 of the intermediate portion 72.

A length indicated by a double-headed arrow MK is the groove depth of the end portion 70 of the crown sipe 50. The groove depth MK is represented as the distance in the depth direction from the groove opening 50M of the crown sipe 50 to the groove bottom 70T of the end portion 70. The groove depth MK corresponds to the groove depth of the crown sipe 50 at both ends in the length direction of the crown sipe 50.

The ratio mk1/MK of the groove depth mk1 of the crown sipe 50 at the center in the length direction of the crown sipe 50 to the groove depth MK of the crown sipe 50 at both ends in the length direction of the crown sipe 50 is preferably greater than 1.0 and not greater than 1.5.

When the ratio mk1/MK is set to be greater than 1.0, the movement of the crown narrow land portion 44 is effectively restricted. Since deformation of the crown narrow land portion 44 is suppressed, the tire 2 can reduce rolling resistance. From this viewpoint, the ratio mk1/MK is more preferably not less than 1.2.

When the ratio mk1/MK is set to be not greater than 1.5, the influence of the intermediate portion 72, which is located at the center in the length direction of the crown sipe 50, on the stiffness of the crown narrow land portion 44 is suppressed. Since the stiffness of the crown narrow land portion 44 is appropriately maintained, low rolling resistance is maintained. From this viewpoint, the ratio mk1/MK is more preferably not greater than 1.3.

Each crown sipe 50 is shallower than the crown narrow groove 32. Each crown sipe 50 disappears before the crown narrow groove 32.

From the viewpoint that the influence of transition from the crown sipe 50 to the wide portion 42 of the crown narrow groove 32 on rolling resistance and on wet performance can be suppressed to be smaller, the ratio mk1/df of the groove depth mk1 of the crown sipe 50 to the groove depth df of the crown narrow groove 32 is preferably not less than 0.70 and not greater than 0.90 and more preferably not greater than 0.75 and not less than 0.85.

As shown in FIG. 6, the groove bottom 72T of the intermediate portion 72 of the crown sipe 50 is located radially inward of the maximum groove width position PF of the wide portion 42 of the crown narrow groove 32. Accordingly, the influence of transition from the crown sipe 50 to the wide portion 42 of the crown narrow groove 32 on rolling resistance and on wet performance is effectively suppressed. From this viewpoint, it is preferable that the groove bottom 72T of the intermediate portion 72 of the crown sipe 50 is located radially inward of the maximum groove width position PF of the wide portion 42 of the crown narrow groove 32.

The groove bottom 70T of each end portion 70 of the crown sipe 50 is located between the maximum groove width position PF of the wide portion 42 of the crown narrow groove 32 and the boundary PB between the body portion 40 and the wide portion 42 of the crown narrow groove 32 in the radial direction. Accordingly, the influence of the crown sipe 50 on rolling resistance and wet performance is effectively suppressed. From this viewpoint, it is preferable that the groove bottom 70T of each end portion 70 of the crown sipe 50 is located between the maximum groove width position PF of the wide portion 42 of the crown narrow groove 32 and the boundary PB between the body portion 40 and the wide portion 42 of the crown narrow groove 32 in the radial direction.

In FIG. 6, a double-headed arrow HR indicates the groove depth from the groove opening 32M of the crown narrow groove 32 to the boundary PR between the inflection portion 66 and the bottom portion 68 in the wide portion 42 of the crown narrow groove 32.

In the tire 2, it is preferable that the groove bottom 70T of the end portion 70 of the crown sipe 50 is located near the boundary PR between the inflection portion 66 and the bottom portion 68 in the wide portion 42. Accordingly, the influence of the crown sipe 50 on rolling resistance and wet performance is effectively suppressed. From this viewpoint, the ratio MK/HR of the groove depth MK of the end portion 70 of the crown sipe 50 to the groove depth HR to the boundary PR between the inflection portion 66 and the bottom portion 68 in the wide portion 42 is preferably not less than 0.90 and not greater than 1.10 and more preferably not less than 0.95 and not greater than 1.05.

As is obvious from the above description, according to the present invention, a heavy duty tire that can suppress a decrease in wet performance due to wear while reducing rolling resistance, is obtained.

The above-described technology capable of suppressing a decrease in wet performance due to wear while reducing rolling resistance can be applied to various tires.

## Claims

1. A heavy duty tire (2) comprising a tread (4), the tread (4) having a tread surface (6) configured to come into contact with a road surface, wherein
the tread (4) has a plurality of circumferential main grooves (10) extending continuously in a circumferential direction,
the plurality of circumferential main grooves (10) include a crown circumferential main groove (14) located on an equator plane (EL) of the tire (2) and a pair of shoulder circumferential main grooves (12) each located on an outermost side in an axial direction,
the plurality of circumferential main grooves (10) demarcate a plurality of land portions (18) in the tread (4),
the plurality of land portions (18) include a pair of crown land portions (20) closest to the equator plane (EL) and a pair of shoulder land portions (22) each located axially outward of the shoulder circumferential main groove (12) and including an end (TE) of the tread surface (6),
each of the pair of crown land portions (20) has a crown narrow groove (32) extending continuously in the circumferential direction,
the crown narrow groove (32) includes a plurality of inner narrow grooves (34) and a plurality of outer narrow grooves (36) arranged alternately in the circumferential direction, and a plurality of connection narrow grooves (38, 38a, 38b) connecting the inner narrow grooves (34) and the outer narrow grooves (36),
the outer narrow grooves (36) are located axially outward of the inner narrow grooves (34),
the crown narrow groove (32) includes a body portion (40) including a groove opening (32M) of the crown narrow groove (32) and a wide portion (42) located radially inward of the body portion (40) and including a groove bottom (32T) of the crown narrow groove (32),
the wide portion (42) has a groove width wider than a groove width of the body portion (40),
a pair of wall surfaces (32W) of the crown narrow groove (32) come into contact with each other at the body portion (40) when the tread (4) comes into contact with a road surface and becomes deformed,
the crown narrow groove (32) demarcates two crown narrow land portions (44) in the crown land portion (20),
each of the two crown narrow land portions (44) has a plurality of crown sipes (50) traversing the crown narrow land portion (44),
of the two crown narrow land portions (44), the crown narrow land portion (44) located on an axially inner side is an inner crown narrow land portion (46), and the crown narrow land portion (44) located on an axially outer side is an outer crown narrow land portion (48),
each of the crown sipes (50) of the inner crown narrow land portion (46) is an inner crown sipe (54),
a plurality of the inner crown sipes (54) are aligned in the circumferential direction on the inner crown narrow land portion (46),
each of the crown sipes (50) of the outer crown narrow land portion (48) is an outer crown sipe (58),
a plurality of the outer crown sipes (58) are aligned in the circumferential direction on the outer crown narrow land portion (48),
the plurality of the inner crown sipes (54) and the plurality of the outer crown sipes (58) are arranged alternately in the circumferential direction on the crown land portion (20),
one said inner crown sipe (54) and one said outer crown sipe (58) are connected to each of the plurality of the inner narrow grooves (34), and
one said inner crown sipe (54) and one said outer crown sipe (58) are connected to each of the plurality of the outer narrow grooves (36).

2. The heavy duty tire (2) according to claim 1, wherein the crown circumferential main groove (14) includes first peaks (14a) closer to a first end (TE1) of the tread surface (6) and second peaks (14b) closer to a second end (TE2) of the tread surface (6), and extends in a zigzag manner while passing through the first peaks (14a) and the second peaks (14b) alternately in the circumferential direction.

3. The heavy duty tire (2) according to claim 1 or 2, wherein the crown narrow groove (32) has a groove depth df which is the same as a groove depth DGc of the crown circumferential main groove (14), or is shallower than the crown circumferential main groove (14).

4. The heavy duty tire (2) according to any one of claims 1 to 3, wherein
the body portion (40) includes a fitted portion (62) between the groove opening (32M) and the wide portion (42) of the crown narrow groove (32), and
the fitted portion (62) has a wavy shape.

5. The heavy duty tire (2) according to any one of claims 1 to 4, wherein each of the crown sipes (50) includes an uneven portion (74) at a center in a length direction thereof, and
in the uneven portion (74), the crown sipe (50) extends in a zigzag manner in the length direction and a depth direction thereof.

6. The heavy duty tire (2) according to any one of claims 1 to 5, wherein a groove depth (MK) of the crown sipe (50) at both ends in a length direction of the crown sipe (50) is shallower than a groove depth (mk1) of the crown sipe (50) at a center in the length direction of the crown sipe (50).
